# EUROPEAN PATENT APPLICATION

(11) **EP 2 634 990 A1**
(43) Date of publication of application: **04.09.2013**
(21) Application number: 12305257.3
(22) Date of filing: 02.03.2012
(51) Int. Cl.: H04L 29/06

(54) **Home gateway with secure access**

(71) Applicant: Thomson Licensing, 92130 Issy-les-Moulineaux (FR)
(72) Inventor: van den Broeck, Roel, 2970 Schilde (BE); Dumet, Sylvain, 1785 Merchtem (BE)
(74) Representative: Schmidt-Uhlig, Thomas

(57) **Abstract**

The present invention relates to a home gateway (1) with a secure access for external devices (5, 6), as well as to a method for establishing a secure connection to such a home gateway (6). The gateway (1) comprises at least one input (11) for connecting a device (5, 6) or an application and at least one network connector (12) for establishing a connection to a network (10). **T**he gateway (1) is adapted to act as a certificate authority and to issue a digital certificate or a signed application to a device (5, 6) or an application connected to the gateway (1) via the input (11).

## Description

The present invention relates to a home gateway with a secure access for external devices, as well as to a method for establishing a secure connection to such a home gateway.

Nowadays home gateways are more and more becoming the center of the connected home. The traditional triple play functionality, which includes Internet, TV, and Voice services, is increasingly extended with extra functionality. For example, hard disks can be attached via the available USB ports. The home gateway integrates the necessary protocols to have access to the hard disk using protocols like samba, DLNA (DLNA: Digital Living Network Alliance), or (s) FTP (FTP: File Transfer Protocol; sFTP: SSH File Transfer Protocol; SSH: Secure Shell). Often applications can be installed on a gateway, e.g. automatic backup to cloud servers, bittorent clients, etc.

Another notable trend is that users not only want to have access to their applications and data available through their home gateway in the home, but they want to have access from everywhere. This, however, leads to some technical problems.

To begin with, gateways are rather difficult to configure. For example, they are protected by firewalls and NAT (NAT: Network Address Translation). Users thus need to configure firewall rules and NAT port forwarding configurations to get access from the Internet, for example.

A further issue is that the connections are insecure. Gateways, which are configured to allow access to the home, are difficult to protect against attacks. If it is open for a user, it is almost always open for others. A simple protection based on user credentials is not sufficient and open for brute force attacks.

Also, devices are generally not protected against theft. Once a user has configured access to his home, the devices he uses to access the data can be stolen.

To overcome these problems network service providers are setting up backend infrastructure based on web technology. The gateways are preconfigured to allow incoming connections from the server. The end users in these cases do not directly connect to the home, but first have to login to a backend server. The server will then directly connect to the gateway. The connection between the backend infrastructure and the gateway can be secured using TLS (TLS: Transport Layer Security) and mutual authentication. The backend portal server can integrate web services to access local storage.

Still, creating an account on the backend infrastructure remains difficult. In addition, backend infrastructures are rather expensive and the devices are still not protected against theft. User accounts are cached in browsers. Once one has access to a stolen device, he or she also has access to the home.

It is an object of the present invention to propose a solution for a home gateway with a secure access for external devices, which is easy to configure.

According to the invention, this object is achieved by a gateway comprising at least one input for connecting a device or an application and at least one network connector for establishing a connection to a network, which is adapted to act as a certificate authority and to issue a digital certificate or a signed application to a device or an application connected to the gateway via the input.

Similarly, a method for controlling access rights of a device or an application to a gateway comprises the steps of:
- establishing a connection between the device or the application and the gateway;
- generating a digital certificate or a signed application by the gateway; and
- transferring the digital certificate or the signed application to the device or the application.

The invention defines an easy way to be able to access applications running on the gateway and to have access to personal data available via the gateway from everywhere. The gateway is provided with a unique certificate during production, i.e. a root certificate. A PC, a tablet, a smartphone, an application or the like connects to the gateway and requests a certificate. The gateway generates the requested digital certificate or a signed application using its root certificate and transfers this certificate to the connected device or application, i.e. the gateway acts as a certificate authority. From that moment on the device or application is provided with the home gateway certificate and with its own certificate.

Preferably, the gateway is adapted to provide a secure user interface for setting up devices or applications that shall have secure access to the gateway. The secure user interface allows the user to perform the complete enrollment of a device by just clicking on a button.

Favorably, the enrollment of certificates is only possible in the home by authorized users. For this purpose the gateway is adapted to request user credentials for issuing the digital certificate or the signed application.

In order to establish a secure connection between a device or an application and a gateway, the following steps are performed:
- establishing a connection between the device or the application and the gateway;
- verifying a device or application digital certificate or a signed application with a digital certificate or a signed application generated by the gateway; and
- in case the verifying yields a positive result, establishing a secure connection between the device or the application and the gateway.

The home gateway is pre-configured to accept calls from everywhere, i.e. from the home or from the internet in a secure way using TLS and mutual authentication with certificates. Once a device or application is provided with a certificate or a signed application it is ready to setup a secure connection to the gateway from everywhere. To this end the home gateway verifies the device or application certificate or signed application with the one that has been locally stored during the enrollment process. A secure connection is only established in case of a positive verification. Advantageously, also the device or application verifies the home gateway certificate with the one provided during enrollment for increased security.

Preferably, the gateway is adapted to remove an issued digital certificate or an issued signed application via the secure user interface. This allows an authorized user to block stolen devices by removing the enrolled certificate from the home gateway.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: schematically illustrates a typical home gateway topology;
- Fig. 2: schematically depicts an initial setup of a gateway according to the invention in the home;
- Fig. 3: illustrates secure access to the gateway in the home;
- Fig. 4: depicts secure access to the gateway from a remote PC; and
- Fig. 5: schematically illustrates a method for configuring an allowed device during an initial setup phase.

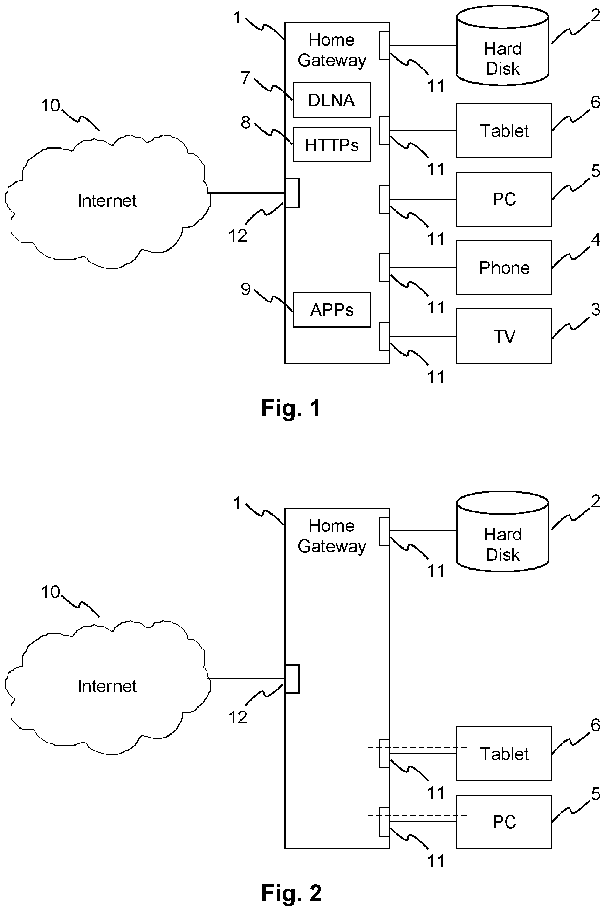

Fig. 1 shows an example of a typical home gateway topology. The home gateway 1 has an attached hard disk 2. Different devices are connected to the gateway 1 via a plurality of inputs 11, e.g. via cable or wireless, namely a DLNA TV 3, a phone 4 for voice over IP (IP: Internet Protocol) calls, a PC 5 and a tablet 6 used in the home. The home gateway 1 supports extended functionality like DLNA 7, Secure UI (UI: User Interface) using HTTPs 8 (HTTPs: Hypertext Transfer Protocol Secure) and extra applications 9. The home gateway 1 also is the gate to the internet 10 via a network connector 12.

In Fig. 2 an initial setup phase of a home gateway 1 according to the invention is illustrated, where the dashed lines designate logical connections or data transfers. The home gateway 1 is provided with a unique certificate during production. The home gateway 1 is pre-configured to accept connections in a secure way using TLS and mutual authentication with certificates. All devices that want to have access to locally stored data or to applications running on the home gateway 1 need to be setup. For this purpose an application that runs on the device to be connected, e.g. a PC 5 , a tablet 6, or a smartphone, connects to a special setup web service provided by the home gateway 1. On this web service the end user provides the user credentials of the home gateway 1. The home gateway 1 then acts as a certificate authority and generates a signed application or device certificate using its local device certificate. Finally, this certificate and the 'root' certificate of the home gateway 1 are embedded in the connected device or application. The allowed devices and applications are hence configured in a very easy manner without involvement of any expensive backend equipment.

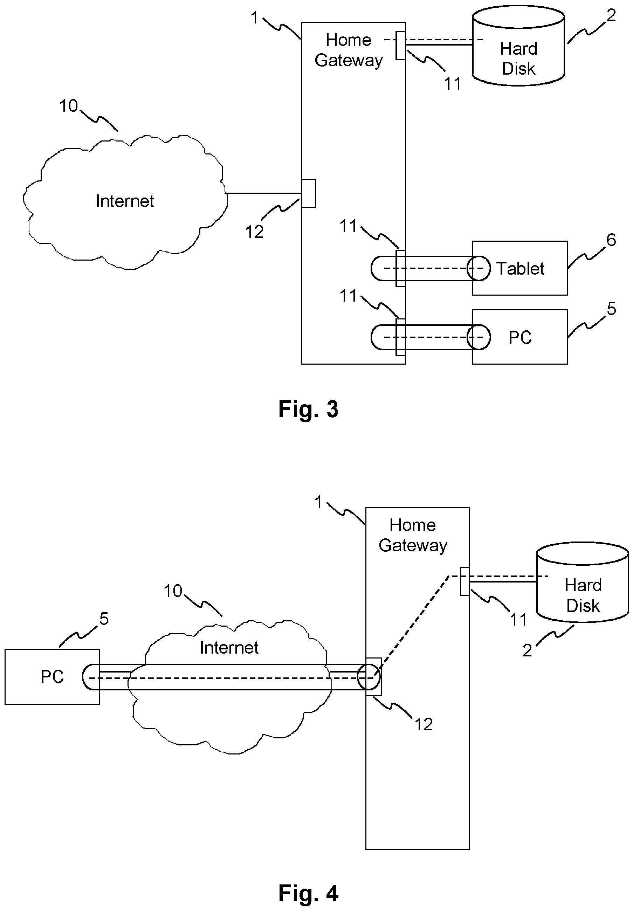

Fig. 3 schematically illustrates secure access to the gateway 1 in the home. The devices 5, 6 or applications can setup a secure connection to the home gateway 1. During a connection setup phase the devices 5, 6 verify the home gateway certificate with the one provided during the initial setup phase. Likewise, the home gateway 1 verifies the device or application certificate with the one enrolled during the initial setup phase. No credentials needs to be provided for these verifications. If all verifications yield a positive result, secure connections are established between the home gateway 1 and the devices 5, 6 or applications, as indicated by the 'pipes' surrounding the connections.

Fig. 4 schematically illustrates secure access to the gateway 1 from the internet 10. The home gateway 1 is configured to accept incoming connections from everywhere, i.e. also from the internet 10. There is no difference between setting up a secure connection from the internet 10 and setting up a secure connection from the home. During the connection setup phase the device 5 verifies the home gateway certificate with the one provided during the initial setup phase and the home gateway 1 verifies the device certificate with the one enrolled during the initial setup phase. No credentials needs to be provided for these verifications. If all verifications yield a positive result, a secure connection is established between the home gateway 1 and the device 5. Access to the applications running on the home gateway 1 and to data or content of connected storage devices 2 is thus identical and secure irrespective of whether the access is from home or from the internet.

In case of a theft of a device 5, 6a, the home gateway 1 provides a solutions to delete all 'enrolled' certificates from stolen devices. A user knowing the user credentials of the home gateway 1 can log in and remove the generated credentials from a stolen device. The user thus has full control over allowed devices and applications.

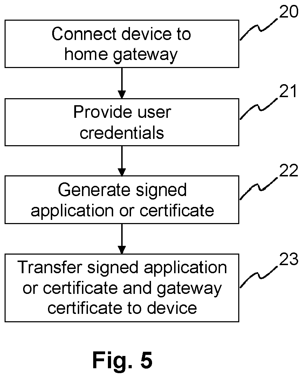

A method for configuring an allowed device 5, 6 during an initial setup phase is schematically illustrated in Fig. 5. In a first step 20 the device 5, 6 to be configured is connected to a special setup web service provided by the home gateway 1. On this web service the end user provides 21 the user credentials of the home gateway 1. The home gateway 1 then acts as a certificate authority and generates 22 a signed application or device certificate using its local device certificate. Finally, this certificate and the 'root' certificate of the home gateway 1 are transferred 23 to the connected device 5, 6.

## Claims

1. A gateway (1), the gateway (1) comprising at least one input (11) for connecting a device (5, 6) or an application and at least one network connector (12) for establishing a connection to a network (10), **characterized in that** the gateway (1) is adapted to act as a certificate authority and to issue a digital certificate or a signed application to a device (5, 6) or an application connected to the gateway (1) via the input (11).

2. The gateway (1) according to claim 1, wherein the gateway (1) comprises a root certificate for generating the digital certificate or the signed application.

3. The gateway (1) according to claim 1 or 2, wherein the gateway (1) is adapted to provide a secure user interface for setting up devices (5, 6) or applications that shall have secure access to the gateway (1).

4. The gateway (1) according to one of claims 1 to 3, wherein the gateway (1) is adapted to request user credentials for issuing the digital certificate or the signed application.

5. The gateway (1) according to claim 3, wherein the gateway (1) is adapted to remove an issued digital certificate or an issued signed application via the secure user interface.

6. The gateway (1) according to one of the preceding claims, wherein the gateway (1) is adapted to establish a secure connection with a connected device (5, 6) or an application by verifying a device or application digital certificate or a signed application with a digital certificate or a signed application issued by the gateway (1).

7. A method for controlling access rights of a device (5, 6) or an application to a gateway (1), the method comprising the steps of:
- establishing (20) a connection between the device (5, 6) or the application and the gateway (1);
- generating (22) a digital certificate or a signed application by the gateway (1); and
- transferring (23) the digital certificate or the signed application to the device (5, 6) or the application.

8. The method according to claim 7, wherein the digital certificate or the signed application is generated using a root certificate of the gateway (1).

9. The method according to claim 7 or 8, **further** comprising the step of requesting (21) user credentials before generating (22) the digital certificate or the signed application.

10. The method according to one of claims 7 to 9, **further** comprising the step of removing a generated digital certificate or a generated signed application.

11. A method for establishing a secure connection between a device (5, 6) or an application and a gateway (1), the method **comprising** the steps of:
- establishing a connection between the device (5, 6) or the application and the gateway (1);
- verifying a device or application digital certificate or a signed application with a digital certificate or a signed application generated (22) by the gateway (1); and
- in case the verifying yields a positive result, establishing a secure connection between the device (5, 6) or the application and the gateway (1).
